(19) Europäisches Patentamt / European Patent Office / Office européen des brevets

(11) **EP 2 693 599 B1**

(12) **EUROPEAN PATENT SPECIFICATION**

(45) Date of publication and mention
of the grant of the patent:
**06.07.2016 Bulletin 2016/27**

(21) Application number: **12763594.4**

(22) Date of filing: **27.03.2012**

(51) Int Cl.:
*H02J 50/20* (2016.01)    *H02J 5/00* (2016.01)
*H03H 7/40* (2006.01)    *H01F 38/14* (2006.01)
*B60L 11/18* (2006.01)

(86) International application number:
**PCT/JP2012/002121**

(87) International publication number:
**WO 2012/132412 (04.10.2012 Gazette 2012/40)**

(54) **POWER TRANSMITTING SYSTEM**

STROMÜBERTRAGUNGSSYSTEM

SYSTÈME DE TRANSMISSION DE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2011 JP 2011075210**

(43) Date of publication of application:
**05.02.2014 Bulletin 2014/06**

(73) Proprietor: **Equos Research Co., Ltd.**
**Chiyoda-ku**
**Tokyo 101-0021 (JP)**

(72) Inventors:
• **ITO, Yasuo**
**Tokyo 101-0021 (JP)**
• **YAMAKAWA, Hiroyuki**
**Tokyo 101-0021 (JP)**

(74) Representative: **TBK**
**Bavariaring 4-6**
**80336 München (DE)**

(56) References cited:
**WO-A1-2010/067763**    **JP-A- 2010 063 245**
**JP-A- 2010 233 442**    **JP-A- 2010 252 446**
**US-A1- 2004 130 915**    **US-A1- 2004 130 916**

**Description**

Technical Field

The present invention relates to a wireless power transmission system in which a magnetic resonance antenna of a magnetic resonance method is used.

Background Art

In recent years, without using power cords and the like, development of technology for wirelessly transmitting power (electric energy) has become popular. Among the methods for wirelessly transmitting power, as a technique that is of particularly high interest, there is a technique called a magnetic resonance method. The magnetic resonance method was proposed by a research group of the Massachusetts Institute of Technology in 2007. The related technique thereof is disclosed, for example, in Patent Document 1 (Jpn. PCT National Publication No. 2009-501510).

In a wireless power transmission system of the magnetic resonance method, a resonance frequency of a power-transmission-side antenna is equal to a resonance frequency of a power-reception-side antenna. Therefore, from the power-transmission-side antenna to the power-reception-side antenna, energy is transmitted efficiently. One of the major features is that a power transmission distance can be several dozen centimeters to several meters.

Patent Document 1: Jpn. PCT National Publication No. 2009-501510

Disclosure of the Invention

Problems to be Solved by the Invention

In a conventional power transmission system, in order to check if energy is efficiently transmitted from the power-transmission-side antenna to the power-reception-side antenna, a directional coupler or the like is used to measure VSWR (Voltage Standing Wave Ratio). If the power-transmission-side antenna and the power-reception-side antenna resonate at a resonant frequency, VSWR takes a minimum value. Accordingly, in the conventional power transmission system, the frequency is changed, and the directional coupler is used to measure VSWR; by selecting a frequency at which VSWR becomes minimum, power is transmitted.

However, it is very difficult to adjust the sensitivity of the directional coupler, and it is difficult to obtain a constant output. In the conventional power transmission system, even when a frequency at which VSWR becomes minimum is selected, there is a possibility that the transmission is not carried out at a frequency at which the transmission is most efficient, which is a problem in terms of energy efficiency.

Document US 2004/130915 A1 discloses a power transmission system as defined in the preamble of claim 1. In particular, adaptive inductive power supply with communication is described, wherein a switching element (half bridge inverter) is provided, in order to generate an AC voltage of a predetermined frequency which is determined by an oscillator. The generated AC voltage is output to an antenna unit (primary). Furthermore, a current sensing unit is provided, which provides a feedback to the oscillator.

Means for Solving the Problems

In order to solve the above problem, a power transmission system as defined in claim 1 includes: a switching element that converts a DC voltage into an AC voltage of a predetermined frequency to output; a power-transmission antenna unit into which the output AC voltage is input; a current detection unit that detects current flowing through the power-transmission antenna unit; a peak hold unit that acquires a peak value of current detected by the current detection unit; a timer unit that measures a timer value of a difference in time between when the switching element is turned ON and when a zero current is detected by the current detection unit; a frequency determination unit that determines the frequency based on the peak value acquired by the peak hold unit and the timer value measured by the timer unit; and a control unit that drives, based on the frequency determined by the frequency determination unit, the switching element to transmit power.

According to claim 2, in the power transmission system of claim 1, the frequency determination unit calculates efficiency of the switching element to determine the frequency.

According to claim 3, in the power transmission system of claim 1, the frequency determination unit references a predetermined table to determine the frequency.

Advantages of the Invention

The power transmission system of the present invention makes a determination, based on values acquired by circuits such as a phase difference measurement timer unit and a peak hold circuit, as to whether or not the frequency is suitable for power transmission. Therefore, the power transmission system of the present invention easily and accurately can determine the frequency for power transmission, contributing to an improvement in energy-transmission efficiency.

Brief Description of the Drawings

FIG. 1 is a block diagram of a power transmission system according to an embodiment of the present invention.
FIG. 2 is a diagram showing an example in which a power transmission system of an embodiment of the present invention is applied to vehicle charging equipment.
FIG. 3 is a diagram showing an inverter circuit of a power transmission system of an embodiment of the present invention.
FIG. 4 is a diagram showing the configuration of a control unit of a power transmission system of an embodiment of the present invention.
FIG. 5 is diagrams illustrating a phase difference measurement timer unit of a power transmission system of an embodiment of the present invention.
FIG. 6 is a diagram showing an inverter drive waveform and phase difference detection timing of a power transmission system of an embodiment of the present invention.
FIG. 7 is a diagram showing an equivalent circuit of a power-transmission antenna 108 and power-reception-side system 200.
FIG. 8 is a diagram showing input impedance characteristics and overall efficiency of an equivalent circuit.
FIG. 9 is diagrams illustrating a loss of FET (switching element).
FIG. 10 is an example of a model used for calculating a loss of FET (switching element).
FIG. 11 is a diagram showing a detailed timing chart of drive waveforms of switching elements $Q_A$ and $Q_B$, waveform of load voltage V, and waveform of drive current I.
FIG. 12 is a diagram showing a flow of a frequency determination process of a power transmission system of an embodiment of the present invention.
FIG. 13 is a diagram illustrating a data structure of tables in which a relationship between timer values, peak values, and inverter efficiency at predetermined frequencies is stored.
FIG. 14 is a diagram showing a flow of a frequency determination process of a power transmission system of another embodiment of the present invention.

Embodiments for Carrying Out the Invention

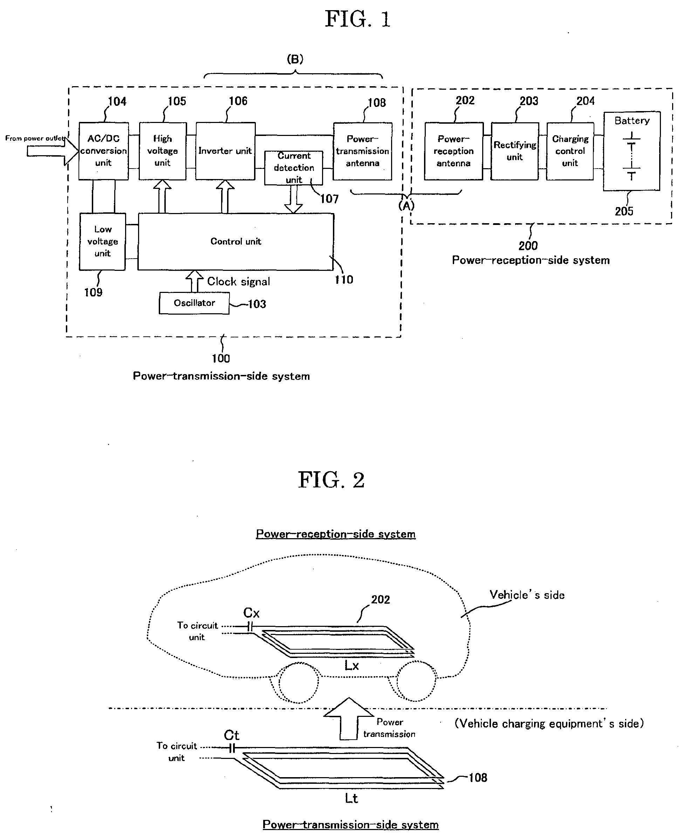

Hereinafter, an embodiment of the present invention will be described with reference to the accompanying drawings. FIG. 1 is a block diagram of a power transmission system according to an embodiment of the present invention. FIG. 2 is a diagram showing an example in which the power transmission system of the embodiment of the present invention is applied to vehicle charging equipment. FIG. 2 is a specific example of the configuration of FIG. 1A. For example, the power transmission system of the present invention is suitable for use in a system that charges vehicles such as electric vehicles (EV) and hybrid electric vehicles (HEV). Hereinafter, an example in which the power transmission system is applied to vehicle charging equipment shown in FIG. 2 is used in the following description. Incidentally, the power transmission system of the present invention can also be used for power transmission other than that of the vehicle charging equipment.

The power transmission system of the embodiment of the present invention is aimed at efficiently transmitting power from a power-transmission antenna 108 of a power-transmission-side system 100 to a power-reception antenna 202 of a power-reception-side system 200. At this time, a resonance frequency of the power-transmission antenna 108 is equal to a resonance frequency of the power-reception antenna 202. Therefore, from the power-transmission-side antenna to the power-reception-side antenna, energy is transmitted efficiently. The power-transmission antenna 108 includes a coil and a capacitor. Inductance of the coil that constitutes the power-transmission antenna 108 is Lt, and capacitance of the capacitor is Ct. As in the case of the power-transmission antenna, the power-reception antenna 202 includes a coil and a capacitor. Inductance of the coil that constitutes the power-reception antenna 202 is Lx, and capacitance of the capacitor is Cx.

In FIG. 2, the configuration shown below a one-dot chain line is of the power-transmission-side system 100; in this example, the configuration is of vehicle charging equipment. The configuration shown above the one-dot chain line is of the power-reception-side system 200; in this example, the configuration is of a vehicle, such as an electric vehicle. For example, the above power-transmission-side system 100 is so formed as to be buried in the ground. When power is transmitted, the vehicle is moved in such a way that the power-reception antenna 202 mounted on the vehicle is aligned with the power-transmission antenna 108 of the power-transmission-side system 100 that is buried in the ground. Then, the power is transmitted and received. The power-reception antenna 202 of the vehicle is disposed in a bottom surface section of the vehicle.

An AC/DC conversion unit 104 of the power-transmission-side system 100 is a converter that converts input commercial power into a constant direct current. As for output from the AC/DC conversion unit 104, there are two lines: one is output to a high voltage unit 105, and the other to a low voltage unit 109. The high voltage unit 105 is a circuit that generates a high voltage, which is supplied to an inverter unit 106. The low voltage unit 109 is a circuit that generates a low voltage, which is supplied to a logic circuit that is used for a control unit 110. Settings of the voltage generated by the high voltage unit 105 can be controlled from the control unit 110.

The inverter unit 106 generates a predetermined AC voltage, using the high voltage supplied from the high voltage unit 105, and supplies the predetermined AC voltage to the power-transmission antenna 108. A current component of the power that is supplied from the inverter unit 106 to the power-transmission antenna 108 can be detected by a current detection unit 107.

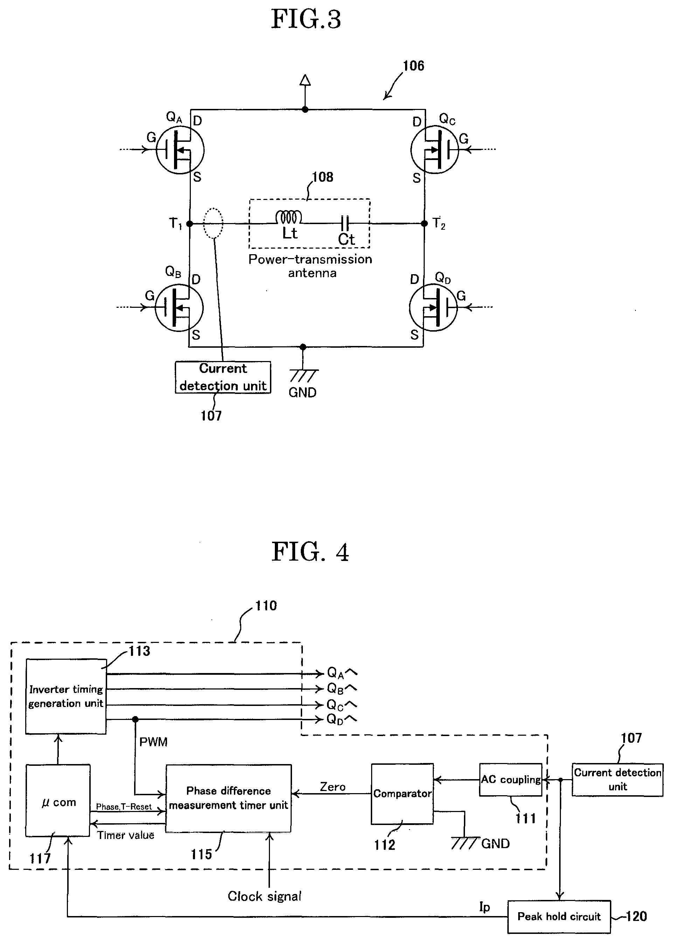

The configuration of components around the inverter unit 106 will be described in more detail with reference to FIG. 3. FIG. 3 is a diagram showing an inverter circuit of the power transmission system of the embodiment of the present invention. FIG. 3 shows a specific configuration of FIG. 1B.

As shown in FIG. 3, the inverter unit 106 includes four field-effect transistors (FETs) $Q_A$ to $Q_D$, which are connected by a full bridge method.

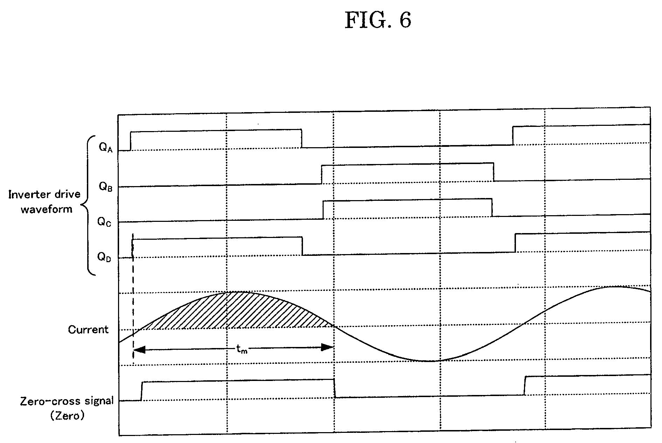

According to the present embodiment, the power-transmission antenna 108 is connected between a connection section T1, which is between the switching elements $Q_A$ and $Q_B$ that are connected in series, and a connection section T2, which is between the switching elements $Q_C$ and $Q_D$ that are connected in series. As shown in FIG. 6, when the switching elements $Q_A$ and $Q_D$ are ON, the switching elements $Q_B$ and $Q_C$ are OFF. Subsequently, when the switching elements $Q_B$ and $Q_C$ are ON, the switching elements $Q_A$ and $Q_D$ are OFF. As a result, between the connection sections T1 and T2 , a square-wave AC voltage is generated.

A drive signal for the switching elements $Q_A$ to $Q_D$ that constitute the above inverter unit 106 is input from the control unit 110.

Incidentally, according to the present embodiment, a DC voltage from a constant voltage source is so controlled as to output, as AC voltage, a rectangular-waveform AC voltage. However, instead of controlling the voltage, current may be controlled. According to the present embodiment, the inverters have a full bridge structure. However, the inverters may have a half bridge structure; even in this case, the same advantageous effects can be obtained.

The control unit 110 includes a microcomputer, a logic circuit, and the like as described later, and takes overall control of the power-transmission-side system 100. An oscillator 103 supplies a clock signal to the microcomputer, logic circuit, and the like, which constitute the control unit 110.

In the power transmission system of the present invention, the control unit 110 selects an optimal frequency for carrying out power transmission. At this time, while varying the frequency of the alternate current generated by the inverter unit 106, the control unit 110 searches for the optimal frequency for the power transmission.

More specifically, the control unit 110 generates an alternate current of a predetermined frequency in the inverter unit 106, and uses a phase difference measurement timer unit 115, which will be described later, to measure a difference in time between when the switching element is turned ON and when a zero current is detected by the current detection unit 107. Moreover, a peak hold circuit 120 acquires a peak value Ip of the current.

Based on a timer time $t_m$ measured by the phase difference measurement timer unit 115, and the peak value Ip of the current, inverter efficiency (Effect) is calculated. The calculation method will be described later in detail.

The control unit 110 calculates inverter efficiency (Effect) while changing a drive frequency of the inverter unit 106. The control unit 110 determines that a frequency that gives the best inverter efficiency (Effect) is an optimal frequency for power transmission. The way the power-transmission frequency is determined by the control unit 110 will be described later in more detail.

After the frequency for the power transmission is determined as described above, the inverter unit 106 is driven at the frequency, and the power that is output from the inverter unit 106 is input into the power-transmission antenna 108. The power-transmission antenna 108 includes the coil, which has an inductance component of Lt, and the capacitor, which has a capacitance component of Ct. The power-transmission antenna 108 resonates with the power-reception antenna 202, which is mounted on a vehicle in such a way as to face the power-transmission antenna 108. Therefore, electric energy that is output from the power-transmission antenna 108 can be transmitted to the power-reception antenna 202.

The following describes the power-reception-side system 200 that is provided on the vehicle. In the power-reception-side system 200, the power-reception antenna 202 resonates with the power-transmission antenna 108, thereby receiving electric energy output from the power-transmission antenna 108. As in the case of the power-transmission-side antenna section, the power-reception antenna 202 includes the coil, which has an inductance component of Lx, and the capacitor, which has a capacitance component of Cx.

The square-wave AC power that is received by the power-reception antenna 202 is rectified by a rectifying unit 203. The rectified power is accumulated in a battery 205 via a charging control unit 204. The charging control unit 204 controls charging of the battery 205 based on instructions from a main control unit of the power-reception-side system 200, which is not shown in the diagram.

The following describes in more detail a process by the control unit 110 of the power-transmission-side system 100 of determining the frequency at a time when the power is transmitted. FIG. 4 is a diagram showing the configuration of the control unit 110 of the power transmission system of the embodiment of the present invention. As shown in FIG. 4, what is input into the control unit 110 is a current value detected by the current detection unit 107, which is mounted between the inverter unit 106 and the power-transmission antenna 108 and is designed to detect current supplied from the inverter unit 106 to the power-transmission antenna 108.

From a current detection value that is input from the current detection unit 107, a DC component is removed by AC coupling 111; the current detection value is then input to one input end of a comparator 112. The other input end of the comparator 112 is connected to the ground. Therefore, from the comparator 112, when the detection current of the current detection unit 107 is zero, a signal (zero-cross signal) is output. The zero-cross signal (Zero) is input into the phase difference measurement timer unit 115.

An inverter timing generation unit 113 of the control unit 110 is so configured as to generate a drive signal for each of the switching elements $Q_A$ to $Q_D$. In one example, among the drive signals, a drive signal for the switching element $Q_D$ is also input into the phase difference measurement timer unit 115 as a PWM signal. Needless to say, one of the drive signals for the other three switching elements $Q_A$, $Q_B$, and $Q_C$ may be input.

From a microcomputer 117 of the control unit 110, a Phase signal and a T-Reset signal are input into the phase difference measurement timer unit 115. A timer value that is measured by the phase difference measurement timer unit 115 is transmitted to the microcomputer 117.

A peak value Ip of a current value detected by the current detection unit 107 is acquired and retained by the peak hold circuit 120. The peak value retained by the peak hold circuit 120 is input to the microcomputer 117.

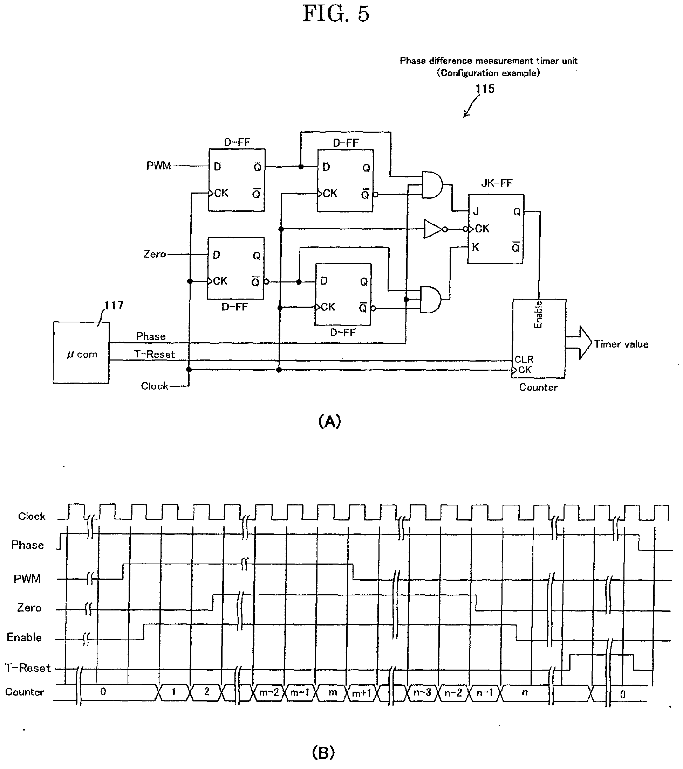

FIG. 5 is diagrams illustrating the phase difference measurement timer unit 115 of the power transmission system of the embodiment of the present invention. FIG. 5A is a diagram showing an example of the circuit configuration of the phase difference measurement timer unit 115. FIG. 5B is a diagram showing operation timing of each component of the phase difference measurement timer unit 115. As shown in FIG. 5B, circuits shown in FIG. 5A operate in the following manner.

After detecting the PWM signal, the phase difference measurement timer unit 115 makes an Enable signal true (H) at the next clock pulse, and starts a counting process of a timer in a counter. After starting the counting process of the timer and then detecting a falling edge of the zero-cross signal (Zero), the phase difference measurement timer unit 115 makes the Enable signal false (L) at the next clock pulse, and stops the counting process of the counter. After the Enable signal turns false (L), an interrupt is designed to occur in the microcomputer 117 (not shown), for example. At a time when the interrupt has occurred, a count value by the counter is read by the microcomputer 117 as a timer value. Then, the T-Reset signal is asserted, and the counter value is reset to zero, and the Phase signal is turned false.

The timer value $t_m$ that is counted by the above phase difference measurement timer unit 115 will be described with reference to FIG. 6. FIG. 6 is a diagram showing an inverter drive waveform and phase difference detection timing of the power transmission system of the embodiment of the present invention. The phase difference measurement timer unit 115 of the power transmission system of the present embodiment measures a difference in time between when a switching element is turned ON and when a zero current is detected for the second time by the current detection unit. That is, in the case of FIG. 6, the phase difference measurement timer unit 115 just counts the time indicated by $t_m$, and outputs as a timer value.

According to the present embodiment, an example in which the counter is used for timer measurement is used in the description. However, from the PWM signal, a triangular wave may be generated and input into an integration circuit; during a period of time when the Enable signal is active, integration may be performed, and the timer value may be converted into a voltage signal and detected (not shown).

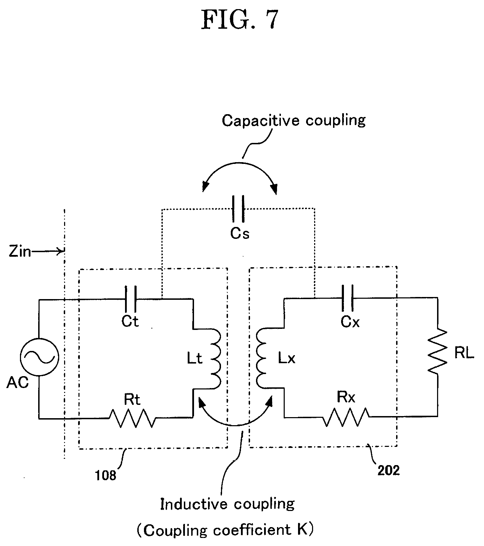

The following describes a process of detecting the above time $t_m$, and making a determination, based on the detected time $t_m$, as to whether or not the frequency is optimum for power transmission. First, take a look at an equivalent circuit of the power-transmission antenna 108 and power-reception antenna 202 shown in FIG. 7.

In FIG. 7, the power-transmission antenna 108 includes the coil, which has an inductance component of Lt, and the capacitor, which has a capacitance component of Ct. Rt is a resistance component of the power-transmission antenna 108.

The power-reception antenna 202 includes the coil, which has an inductance component of Lx, and the capacitor, which has a capacitance component of Cx. Rx is a resistance component of the power-reception antenna 202.

A coupling coefficient of inductive coupling between the power-transmission antenna 108 and the power-reception antenna 202 is represented by K. A capacitive coupling component between the power-transmission antenna 108 and the power-reception antenna 202 is represented by Cs. RL represents a load component of the power-reception antenna 202 and all the subsequent parts.

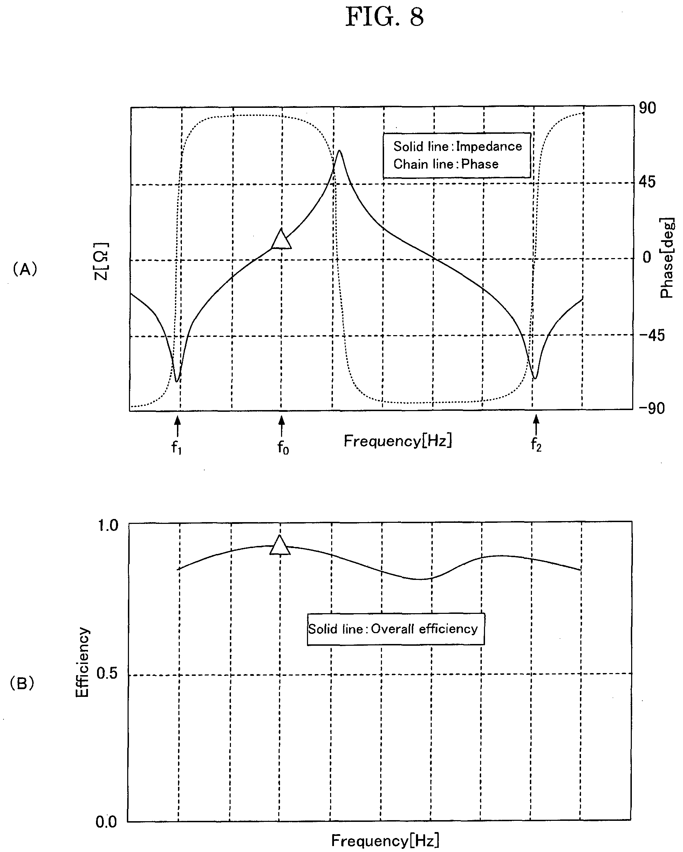

FIG. 8A shows impedance characteristics that are calculated by simulation based on the above equivalent circuit of the power-transmission antenna 108 and power-reception antenna 202. FIG. 8B shows overall power-transmission efficiency, which includes even that of the inverter circuit 106 shown in FIG. 1. The horizontal axis of FIG. 8A and the horizontal axis of FIG. 8B represent the frequency, and FIGS. 8A and 8B use the same scale.

In FIG. 8, frequencies $f_1$ and $f_2$ are frequencies that give minimum points of impedance. Frequency $f_0$ is a frequency that gives a maximum point of overall efficiency. In the power transmission system of the present embodiment, because a process of transmitting power at the frequencies $f_1$ and $f_2$ where the impedance becomes minimum is disadvantageous in terms of overall efficiency, power is transmitted at the frequency $f_0$.

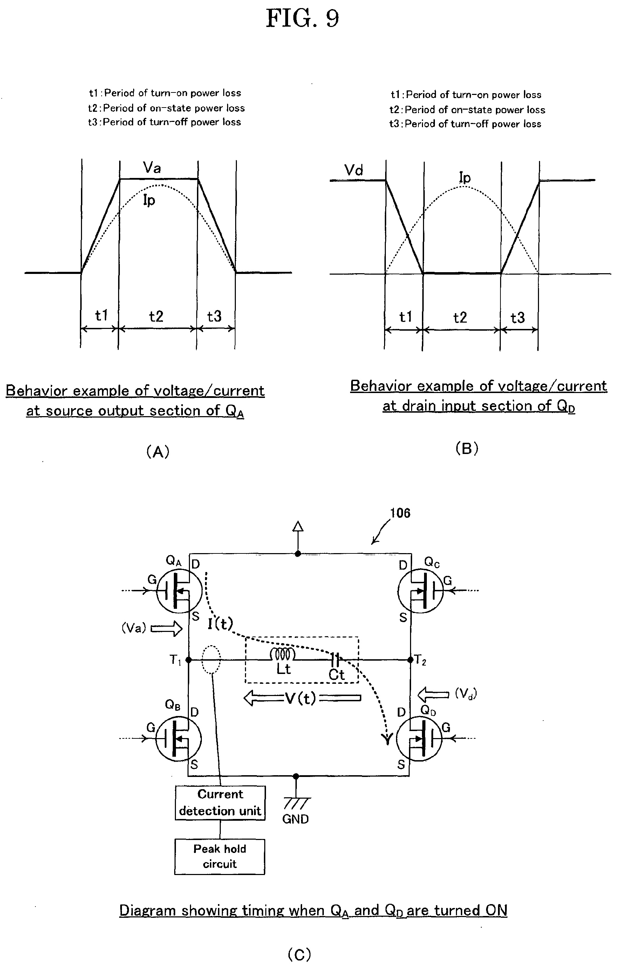

The reason why the overall power-transmission efficiency is maximized at the above frequency f0 will be described. FIG. 9 is diagrams illustrating loss of FET, which is a switching element. The following provides a description based on a half-cycle timing when $Q_A$ and $Q_D$ are ON among the switching elements that constitute the inverter unit 106. However, the same is true for a half-cycle timing when the switching elements $Q_B$ and $Q_C$ are ON.

FIG. 9A is a schematic diagram showing voltage/current behavior in a source output section of the switching element $Q_A$. FIG. 9B is a schematic diagram showing voltage/current behavior in a drain input section of the switching element $Q_D$. FIG. 9C is a diagram showing timing when the switching elements $Q_A$ and $Q_D$ are turned ON. FIG. 9C shows a drive current I(t), which flows when the switching elements $Q_A$ and $Q_D$ are turned ON, and a load voltage V(t), which is applied to a load.

In both FIGS. 9A and 9B, t1 represents a period of time when a turn-on power loss of a switching element occurs; t2 represents a period of time when an on-state power loss of a switching element occurs; t3 represents a period of time when a turn-off power loss of a switching element occurs. In examining the overall efficiency of the power transmission system, it is important to examine not only impedance characteristics between the antennas, but also the above losses of the switching elements.

According to a finding by the inventors, the above frequency $f_0$ is a point where the inverter efficiency is maximized. Therefore, in the power transmission system of the present invention, at the frequency $f_0$ where the inverter efficiency is maximized, power is transmitted. First, an attempt is made to calculate the inverter efficiency (Effect) based on a loss model of the FET (switching element).

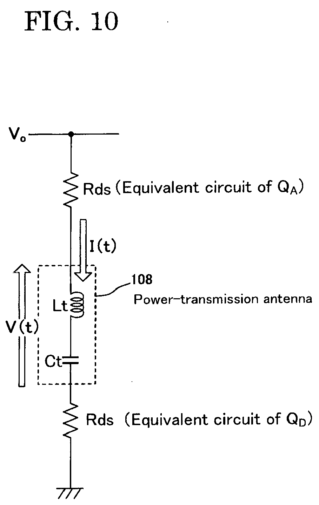

FIG. 10 is an example of a model used for calculating a loss of the FET (switching element). FIG. 10 shows a model at a time when both the switching elements $Q_A$ and $Q_D$ are ON. Because the same is true for the timing when the switching elements $Q_B$ and $Q_C$ are ON, the case of FIG. 10 will be used for modeling in the following description.

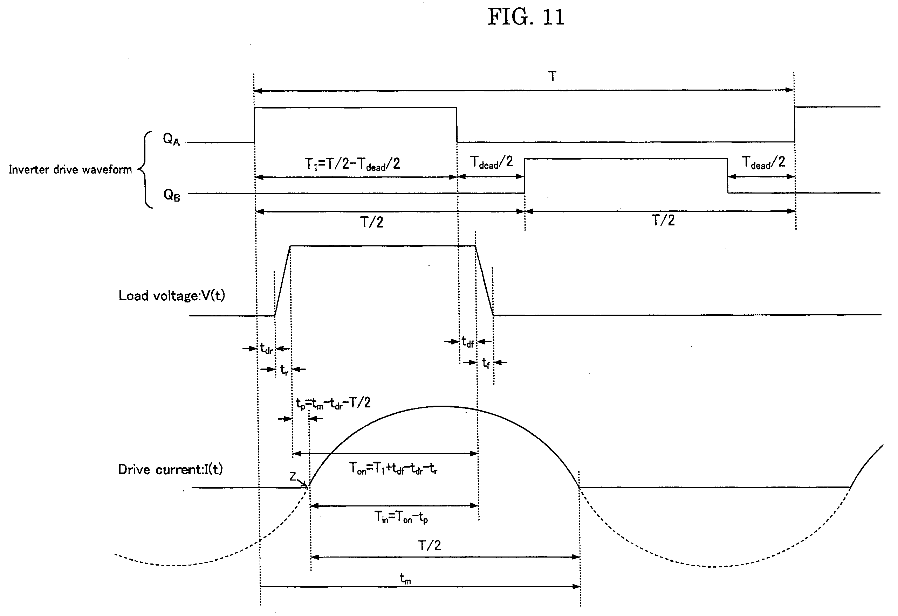

FIG. 11 is a diagram showing a detailed timing chart of drive waveforms of the switching elements $Q_A$ and $Q_B$, waveform of the load voltage V(t), and waveform of drive current I(t) in the model of FIG. 10. In FIG. 11, a drive cycle is represented by T; dead time by $T_{dead}$; a FET on-delay time by $t_{dr}$; a FET output voltage rise time by $t_r$; a FET off-delay time by $t_{df}$; a FET output voltage fall time by $t_f$; and a timer value counted by the phase difference measurement timer unit 115 by $t_m$. Among the above times, those other than $t_m$ can be treated as a known amount.

In this case, in an ON/OFF control process of the switching elements, the dead time $T_{dead}$ is provided to prevent the elements from being destroyed as excessive current flows after those connected in series (e.g. the switching elements $Q_A$ and $Q_B$) are turned ON at the same time. The dead time $T_{dead}$ is a value that is set arbitrarily depending on characteristics of the switching elements.

As shown in FIG. 10, assume that the resistance between the source and drain of the switching element $Q_A$ is $R_{ds}$, and the resistance between the source and drain of the switching element $Q_D$ is $R_{ds}$. If the voltage that the high voltage unit 105 applies to the inverter unit 106 is Vo, the voltage that is applied to a load (the inductance Lt and capacitance Ct of the power-transmission antenna 108) is: V (t) =V0-2· I (t) · Rds. Therefore, load power $P_{in}$ of the power-transmission antenna 108 is represented by the following formula (1).

[Formula 1]

$$P_{in}$$

$$= \frac{1}{T} \int_0^T V(t)I(t)dt$$

$$= \frac{1}{T} ( \int_0^T V_0 I(t)dt - 2 \int_0^T I(t)I(t)R_{ds}dt ) \qquad \ldots (1)$$

$$= \frac{1}{T} ( \int_0^{T_{in}} V_0 I(t)dt - 2 \int_0^{T_{in}} I(t)I(t)R_{ds}dt )$$

In the formula (1), the first term of the last line is equivalent to power ($P_{total}$) that is supplied to the inverter unit 108; the second term is equivalent to a FET on-state power loss ($P_{onloss}$). That is, the total power ($P_{total}$) is represented by the following formula (2), and the FET on-state power loss ($P_{onloss}$) by the following formula (3).

[Formula 2]

$$P_{total} = \frac{1}{T} \int_0^{T_{in}} V_0 I(t)dt \qquad \ldots (2)$$

[Formula 3]

$$P_{onloss} = \frac{2}{T} \int_0^{T_{in}} I(t)I(t)R_{ds}dt \qquad \ldots (3)$$

Incidentally, in the last line of the formula (1), as for the interval of integration, the time Z when the drive current has crossed zero (from - to +) in FIG. 11 is set to zero.

As described above, as for the FETs used for the inverter unit 106, in addition to the on-state power loss, there is a switching loss. In the example of timing shown in FIG. 11, the losses occur during the periods $t_r$ and $t_f$. In this case, when a falling curve is represented by Vf (known amount), the turn-off power loss ($P_{t\_off\_loss}$) is represented by the following formula (3).

[Formula 4]

$$P_{t\_off\_loss} = \frac{1}{T} \int_0^{t_f} V_f I(t)dt \qquad \ldots (4)$$

When a rising curve is represented by Vr (known amount), the turn-on power loss ($P_{t\_on\_loss}$) is represented by the following formula (5).

[Formula 5]

$$P_{t\_on\_loss} = \frac{1}{T} \int_0^{t_f} V_r I(t)dt \qquad \ldots (5)$$

Incidentally, the reason why the interval of integration is [0, $t_f$] in the formula (5) is that the value of $t_f$ is substantially equal to the value of $t_r$. Incidentally, when the integration of the formulae (4) and (5) is carried out, $t_f$ is a known amount.

However, if $t_f$ and $t_r$ are considered to be small enough compared with the cycle T (1/100 or less, for example), the turn-off power loss and the turn-on power loss may be ignored.

The inverter efficiency (Effect) of the inverter unit 108 is calculated by substituting the formulae (2) to (5) into the following formula (6).
[Formula 6]

$$Effect = (P_{total} - P_{t\_on\_loss} - P_{on\_loss} - P_{t\_off\_loss}) / P_{total} \quad \text{...}(6)$$

As for the drive current I(t) in the formulae (2) to (5), by making use of the peak current (Ip) of the drive current acquired and retained by the peak hold circuit 120, it is possible to approximate as in the formula (7). Incidentally, instead of using an approximate formula like that the formula (7), an AD converter may be used to perform data-sampling to calculate I(t). In this case, data of several hundred samples or more per cycle is required to keep calculation accuracy. Therefore, the sampling rate needs to be increased. Accordingly, needless to say, a data collection load on the microcomputer 117 and the like grows.
[Formula 7]

$$I(t) = I_p \sin(\frac{2\pi t}{T}) \quad \text{...}(7)$$

As for the drive current waveform shown in FIG. 11, what is shown is an example in which, after the switching element $Q_A$ is turned OFF, zero-crossing (from + to -) takes place. However, zero-crossing may take place when the switching element $Q_A$ is ON; even in this case, the efficiency can be calculated in the same way described above.
Based on the relationship of the timing chart of FIG. 11, the following describes how to calculate $T_{in}$ at a time when the formulae (2) and (3) are calculated. With reference to the timing chart of FIG. 11, the formula (8) is satisfied.
[Formula 8]

$$t_p = t_m - t_{dr} - T/2 \quad \text{...}(8)$$

Moreover, given the following relationship:
[Formula 9]

$$T_1 = T/2 - T_{dead}/2 \quad \text{...}(9)$$

the following formula (10) is satisfied.
[Formula 10]

$$T_{on} = T_1 + t_{df} - t_{dr} - t_r$$
$$= T/2 - T_{dead}/2 + t_{df} - t_{dr} - t_r \quad \text{...}(10)$$

Based on the above formulae (8) and (10), the following formula (11) is obtained.
[Formula 11]

$$T_{in} = T_{on} - t_p$$
$$= T/2 - T_{dead}/2 + t_{df} - t_{dr} - t_r - (t_m - t_{dr} - T/2)$$
$$= T - T_{dead}/2 + t_{df} - t_r - t_m \qquad \ldots (11)$$

In the last line of formula (11), $T_{dead}$, $t_{df}$, and $t_r$ are known amounts. The phase difference measurement timer unit 115 can count tm. Therefore, the interval of integration $T_{in}$ can be calculated.

The following summarizes again the procedure by the power transmission system of the present embodiment of calculating the inverter efficiency (Effect).

First, the timer value $t_m$ counted by the phase difference measurement timer unit 115 is applied to the formula (11) to calculate the interval of integration $T_{in}$.

The peak hold circuit 120 acquires the current peak value Ip, thereby determining the drive current I(t) in the formula (7) . Based on the drive current I(t) and the interval of integration $T_{in}$, $P_{total}$ is calculated from the formula (2), and $P_{onloss}$ from the formula (3).

Based on the drive current I(t), the turn-off power loss ($P_{t\_off\_loss}$) is calculated by the formula (4), and the turn-on power loss ($P_{t\_on\_loss}$) by the formula (5). Then, the calculated $P_{total}$, $P_{onloss}$, $P_{t\_off\_loss}$, and $P_{t\_on\_loss}$ are substituted into the formula (6). As a result, the inverter efficiency (Effect) is finally calculated.

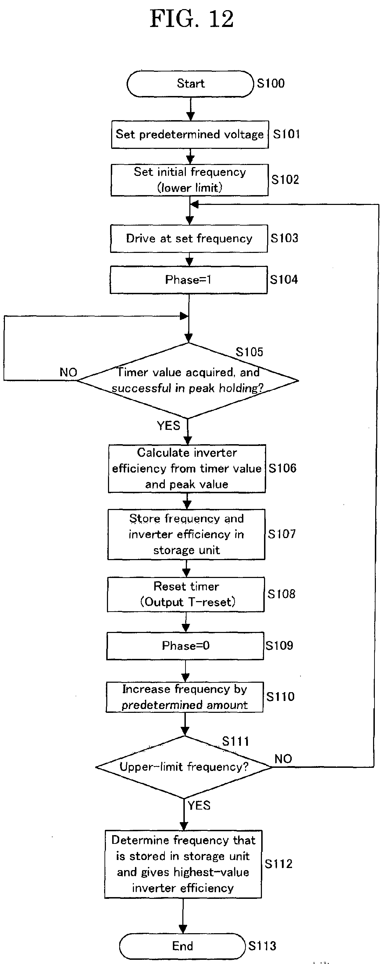

Then, a process by the control unit 110 of determining an optimal frequency will be described. FIG. 12 is a diagram showing a flow of a frequency determination process of the power transmission system of the embodiment of the present invention. The process is performed by the microcomputer 117 of the control unit 110.

In FIG. 12, after the process is started at step S100, a voltage that is to be generated at the high voltage unit 105 is set at the subsequent step S101. At step S102, an initial frequency that is used for driving the inverter unit 106 is set. For example, the initial frequency is a lower-limit frequency value. In this flow, the frequency is gradually increased by a predetermined frequency from the lower-limit frequency value during the process of calculating the inverter efficiency. Incidentally, in this flow, the case where scanning is performed from the lower-limit frequency to an upper-limit frequency will be explained. However, the system may be so configured as to scan from the upper limit to the lower-limit frequency.

At step S103, the inverter unit 106 is driven at the set frequency. At step S104, Phase=1; the data is output to the phase difference measurement timer unit 115. The Enable signal of the counter is made effective.

At step S105, the system waits until the timer value $t_m$ is acquired by the phase difference measurement timer unit 115. That is, the system waits until, in response to a falling edge of the Enable signal, an interrupt signal that indicates an end of timer measurement is generated. At a time when the interrupt signal is generated, the timer value $t_m$ has been acquired, and the current peak value Ip has been acquired in the peak hold circuit 120.

At step S106, the timer value $t_m$ acquired by the phase difference measurement timer unit 115, and the current peak value $I_p$ acquired in the peak hold circuit 120 are used to calculate the inverter efficiency (Effect). The formulae for calculating the inverter efficiency (Effect) are those described above.

At step S107, the drive frequency, and the inverter efficiency (Effect) calculated at step S106 are stored in a storage unit (not shown) in the microcomputer 117.

At step S108, a timer reset (T-Reset) signal is output. At step S109, a Phase signal that is equal to zero is output, thereby disabling the outputting of the Enable signal. At step S110, the set frequency is increased by a predetermined frequency. At step S111, a determination is made as to whether or not the frequency has reached the upper-limit frequency. If the determination is NO, the process goes back to step S103 again, and enters a loop.

If the determination of step S111 is YES, the frequency that is stored in the above storage unit and gives the highest-value inverter efficiency is determined as a frequency for power transmission at step S112. Then, the process comes to an end at step S113.

In the power transmission system of the present invention, based on the frequency that is determined by the method described above, the control unit 110 drives each of the switching elements $Q_A$ to $Q_D$ that constitute the inverter unit 106, thereby actually transmitting power.

As described above, the power transmission system of the present invention makes a determination, based on the values acquired by the circuits such as the phase difference measurement timer unit 115 and the peak hold circuit 120, as to whether or not the frequency is suitable for power transmission. Therefore, the power transmission system of the present invention easily and accurately can determine the frequency for power transmission, contributing to an improvement in energy-transmission efficiency.

The following describes another embodiment of the present invention. According to the above embodiment, based on the timer value $t_m$ acquired by the phase difference measurement timer unit 115 and the current peak value Ip acquired in the peak hold circuit 120, the inverter efficiency (Effect) is calculated one by one. According to the present embodiment, the relationship between timer values tm, peak values Ip, and inverter efficiency at predetermined frequencies is preset in tables; the tables are stored in a non-volatile storage element (not shown) that the microcomputer 117 can reference.

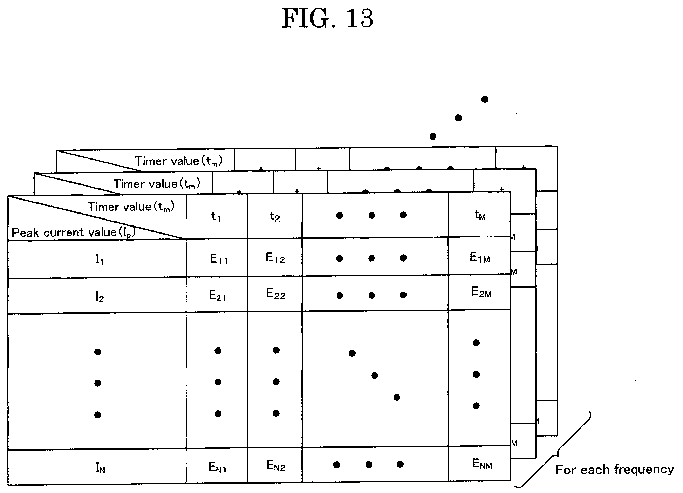

FIG. 13 is a diagram illustrating a data structure of tables in which the relationship between timer values $t_m$, peak values Ip, and inverter efficiency E at predetermined frequencies, which is used in the other embodiment, is stored. As shown in FIG. 13, on the table of a certain frequency, inverter efficiency E is so stored as to be associated with a timer value $t_m$ and a peak value Ip (e.g. inverter efficiency $E_{22}$ at a time when $t_m=t_2$ and $I_p=I_2$). The reason why such tables can be used is that, if the timer value $t_m$ and the peak value Ip are determined for a certain frequency, the tendency of inverter efficiency E, too, can be roughly determined. In obtaining such tables, calculation is performed in advance by using each of the above formulae that are used to calculate the inverter efficiency (Effect). According to the other embodiment, the use of the tables enables the calculation of inverter efficiency (Effect) to be omitted.

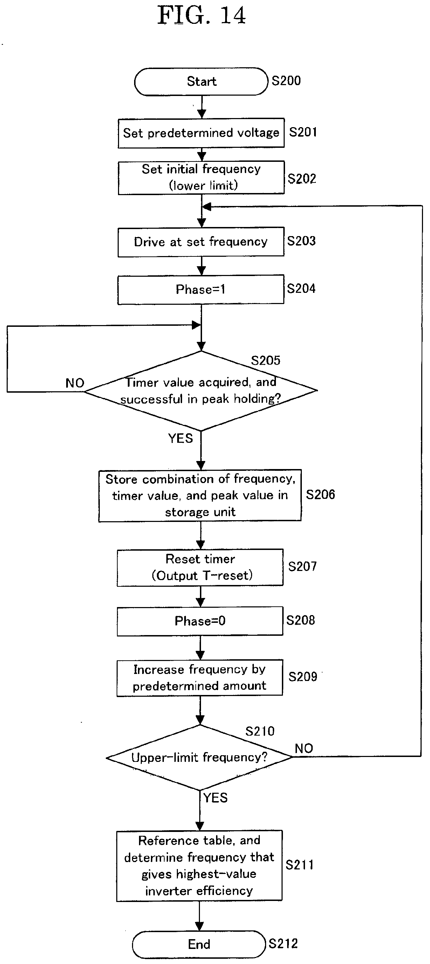

The following describes the process by the control unit 110 of determining an optimal frequency according to the other embodiment with the above configuration. FIG. 14 is a diagram showing a flow of a frequency determination process of a power transmission system of the other embodiment of the present invention.

In FIG. 14, after the process is started at step S200, a voltage that is to be generated at the high voltage unit 105 is set at the subsequent step S201. At step S202, an initial frequency that is used for driving the inverter unit 106 is set. For example, the initial frequency is a lower-limit frequency value. In this flow, the frequency is gradually increased by a predetermined frequency from the lower-limit frequency value during the process of calculating the inverter efficiency. Incidentally, in this flow, the case where scanning is performed from the lower-limit frequency to an upper-limit frequency will be explained. However, the system may be so configured as to scan from the upper limit to the lower-limit frequency.

At step S203, the inverter unit 106 is driven at the set frequency. At step S204, Phase=1; the data is output to the phase difference measurement timer unit 115. The Enable signal of the counter is made effective.

At step S205, the system waits until the timer value $t_m$ is acquired by the phase difference measurement timer unit 115. That is, the system waits until, in response to a falling edge of the Enable signal, an interrupt signal that indicates an end of timer measurement is generated. At a time when the interrupt signal is generated, the timer value $t_m$ has been acquired, and the current peak value Ip has been acquired in the peak hold circuit 120.

At step S206, a combination of the drive frequency, the timer value $t_m$ acquired by the phase difference measurement timer unit 115, and the current peak value Ip acquired in the peak hold circuit 120 is stored in a storage unit (not shown) in the microcomputer 117.

At step S207, a timer reset (T-Reset) signal is output. At step S208, a Phase signal that is equal to zero is output, thereby disabling the outputting of the Enable signal. At step S209, the set frequency is increased by a predetermined frequency. At step S210, a determination is made as to whether or not the frequency has reached the upper-limit frequency. If the determination is NO, the process goes back to step S203 again, and enters a loop.

If the determination of step S210 is YES, the tables of FIG. 13 are referenced at step S211. Among the above combinations, a frequency that gives the highest-value inverter efficiency E is determined as a frequency for power transmission. Then, the process comes to an end at step S212.

As described above, the power transmission system of the other embodiment makes a determination, based on the tables and the values acquired by the circuits such as the phase difference measurement timer unit 115 and the peak hold circuit 120, as to whether or not the frequency is suitable for power transmission. Therefore, the power transmission system of the present invention easily and accurately can determine the frequency for power transmission, contributing to an improvement in energy-transmission efficiency. Furthermore, a calculation load on the microcomputer 117 is reduced, resulting in an increase in the speed of the frequency determination process.

Industrial Applicability

The power transmission system of the present invention is suitable for use in a system that charges vehicles such as electric vehicles (EV) and hybrid electric vehicles (HEV), which have increasingly become popular in recent years. In a conventional power transmission system, in order to check if energy is efficiently transmitted, a directional coupler is used. However, it is very difficult to adjust the sensitivity of the directional coupler, an optimal frequency is not necessarily selected, and there is a problem in terms of energy efficiency. In the power transmission system of the present invention, the timer unit that is simple and can easily be adjusted is used to make a determination as to whether or not the set frequency is suitable. Therefore, when power is transmitted, the frequency can be easily and accurately determined, leading to an improvement in energy-transmission efficiency. As a result, industrial applicability is very high.

Explanation of Reference Symbols

100: Power-transmission-side system
103: Oscillator
104: AC/DC conversion unit
105: High voltage unit
106: Inverter unit
107: Current detection unit
108: Power-transmission antenna
109: Low voltage unit
110: Control unit
111: AC coupling
112: Comparator
113: Inverter timing generation unit
115: Phase difference measurement timer unit
117: Microcomputer
120: Peak hold circuit
200: Power-reception-side system
202: Power-reception antenna
203: Rectifying unit
204: Charging control unit
205: Battery

**Claims**

1. A power transmission system, comprising:

a switching element (**106**) that converts a DC voltage into an AC voltage of a predetermined frequency to output;
a power-transmission antenna unit (**108**) into which the output AC voltage is input;
a current detection unit (**107**) that detects current flowing through the power-transmission antenna unit;
**characterized by**
a peak hold unit (**120**) that acquires a peak value of current detected by the current detection unit (**107**);
a timer unit (**110**) that measures a timer value of a difference in time between when the switching element (**106**) is turned ON and when a zero current is detected by the current detection unit;
a frequency determination unit (**110**) that determines the frequency based on the peak value acquired by the peak hold unit (**120**) and the timer value measured by the timer unit (**110**); and
a control unit (**110**) that drives, based on the frequency determined by the frequency determination unit, the switching element (**106**) to transmit power.

2. The power transmission system according to claim 1, wherein
the frequency determination unit (**110**) calculates efficiency of the switching element (**106**) to determine the frequency.

3. The power transmission system according to claim 1, wherein
the frequency determination unit (**110**) references a predetermined table to determine the frequency.

**Patentansprüche**

1. Leistungsübertragungssystem, mit:

einem Schaltelement (**106**), das eine Gleichspannung in eine Wechselspannung einer vorbestimmten Frequenz zur Ausgabe umwandelt;
einer Leistungsübertragungsantenneneinheit (**108**), an die die ausgegebene Wechselspannung angelegt wird;
einer Stromerfassungseinheit (**107**), die einen durch die Leistungsübertragungsantenneneinheit fließenden Strom erfasst;
**gekennzeichnet durch**
eine Spitzenhalteschaltung (**120**), die einen Spitzenwert des **durch** die Stromerfassungseinheit (**107**) erfassten Stroms beschafft;
eine Zeitmessereinheit (**110**), die einen Zeitmesserwert eine Zeitdifferenz zwischen Einschalten des Schaltelements (**106**) und Erfassung eines Nullstroms **durch** die Stromerfassungseinheit misst;
einer Frequenzbestimmungseinheit (**110**), die die Frequenz auf der Grundlage des **durch** die Spitzenhalteschaltung (**120**) beschafften Spitzenwerts und des **durch** die Zeitmessereinheit (**110**) gemessenen Zeitmesserwerts bestimmt; und
einer Steuerungseinheit (**110**), die auf der Grundlage der **durch** die Frequenzbestimmungseinheit bestimmten Frequenz das Schaltelement (**106**) zur Übertragung von Leistung ansteuert.

2. Leistungsübertragungssystem nach Anspruch 1, wobei
die Frequenzbestimmungseinheit (**110**) einen Wirkungsgrad des Schaltelements (**106**) zur Bestimmung der Frequenz berechnet.

3. Leistungsübertragungssystem nach Anspruch 1, wobei
die Frequenzbestimmungseinheit (**110**) auf eine vorbestimmte Tabelle zur Bestimmung der Frequenz zugreift.

**Revendications**

1. Système de transmission de puissance, comprenant :

un élément de commutation (106) qui convertit une tension continue en une tension alternative d'une fréquence prédéterminée à délivrer ;
une unité d'antenne de transmission de puissance (108) à laquelle la tension alternative de sortie est appliquée ;
une unité de détection de courant (107) qui détecte le courant circulant à travers l'unité d'antenne de transmission de puissance ;
**caractérisé par**
une unité de maintien de valeur crête (120) qui acquiert une valeur crête du courant détecté par l'unité de détection de courant (107) ;
une unité de registre d'horloge (110) qui mesure une valeur de registre d'horloge d'une différence de temps entre le moment où l'élément de commutation (106) est fermé et le moment où un courant nul est détecté par l'unité de détection de courant ;
une unité de détermination de fréquence (110) qui détermine la fréquence sur la base de la valeur crête acquise par l'unité de maintien de valeur crête (120) et de la valeur de registre d'horloge mesurée par l'unité de registre d'horloge (110) ; et
une unité de commande (110) qui commande, sur la base de la fréquence déterminée par l'unité de détermination de fréquence, l'élément de commutation (106) pour transmettre la puissance.

2. Système de transmission de puissance selon la revendication 1, dans lequel
l'unité de détermination de fréquence (110) calcule l'efficacité de l'élément de commutation (106) pour déterminer la fréquence.

3. Système de transmission de puissance selon la revendication 1, dans lequel
l'unité de détermination de fréquence (110) se réfère à une table prédéterminée pour déterminer la fréquence.

EP 2 693 599 B1

FIG. 1

(B)

104   105   106         108

From power outlet → AC/DC conversion unit | High voltage unit | Inverter unit | Current detection unit | Power-transmission antenna

107

(A)

Low voltage unit | Control unit

Clock signal    110

Oscillator —103

109

100
Power-transmission-side system

202   203   204   Battery

Power-reception antenna | Rectifying unit | Charging control unit

205

200
Power-reception-side system

FIG. 2

Power-reception-side system

Cx
To circuit unit

202

Vehicle's side

Lx

Power transmission    (Vehicle charging equipment's side)

Ct
To circuit unit

108

Lt

Power-transmission-side system

13

# FIG.3

# FIG. 4

# FIG. 5

Phase difference measurement timer unit
(Configuration example)
115

(A)

(B)

FIG. 6

# FIG. 7

Capacitive coupling

Cs

Zin→

Ct

Lt

Cx

Lx

RL

AC

Rt

Rx

108

202

Inductive coupling
(Coupling coefficient K)

# FIG. 8

(A)

(B)

# FIG. 9

t1 : Period of turn-on power loss
t2 : Period of on-state power loss
t3 : Period of turn-off power loss

t1 : Period of turn-on power loss
t2 : Period of on-state power loss
t3 : Period of turn-off power loss

Va

Ip

| t1 | t2 | t3 |

Behavior example of voltage/current
at source output section of Q_A

(A)

Vd          Ip

| t1 | t2 | t3 |

Behavior example of voltage/current
at drain input section of Q_D

(B)

106

Q_A  D          D  Q_C
G                     G

S                     S

(Va) ⟹   I(t)

T_1            Lt    Ct            T_2

⟸ V(t) ⟹                    ⟸ (V_d)

Q_B  D          D  Q_D
G                     G

S                     S

Current
detection unit        GND

Peak hold
circuit

Diagram showing timing when Q_A and Q_D are turned ON

(C)

19

# FIG. 10

$V_o$

Rds (Equivalent circuit of $Q_A$)

I(t)

108
Power-transmission antenna

Lt

V(t)

Ct

Rds (Equivalent circuit of $Q_D$)

# FIG. 11

Inverter drive waveform

$Q_A$

$T_1 = T/2 - T_{dead}/2$

$T_{dead}/2$

$T_{dead}/2$

$Q_B$

$T/2$

$T/2$

$T$

Load voltage:V(t)

$t_{dr}$

$t_r$

$t_{df}$

$t_f$

$t_p = t_m - t_{dr} - T/2$

Drive current:I(t)

$Z$

$T_{on} = T_1 + t_{df} - t_{dr} - t_r$

$T_{in} = T_{on} - t_p$

$T/2$

$t_m$

# FIG. 12

```
                    ┌─────────────────┐
                   (     Start        ) S100
                    └─────────────────┘
                             │
                             ▼
              ┌────────────────────────┐
              │ Set predetermined voltage │ S101
              └────────────────────────┘
                             │
                             ▼
              ┌────────────────────────┐
              │   Set initial frequency  │ S102
              │      (lower limit)       │
              └────────────────────────┘
                             │
                             ▼
              ┌────────────────────────┐
              │   Drive at set frequency │ S103
              └────────────────────────┘
                             │
                             ▼
              ┌────────────────────────┐
              │        Phase=1          │ S104
              └────────────────────────┘
                             │
                             ▼
                          S105
        NO      ◇ Timer value acquired, and ◇
     ◄──────────  successful in peak holding?
                             │
                            YES
                             ▼
              ┌────────────────────────┐
              │   Calculate inverter     │ S106
              │ efficiency from timer value│
              │     and peak value       │
              └────────────────────────┘
                             │
                             ▼
              ┌────────────────────────┐
              │    Store frequency and   │ S107
              │   inverter efficiency in │
              │       storage unit       │
              └────────────────────────┘
                             │
                             ▼
              ┌────────────────────────┐
              │      Reset timer         │ S108
              │   (Output T-reset)       │
              └────────────────────────┘
                             │
                             ▼
              ┌────────────────────────┐
              │        Phase=0          │ S109
              └────────────────────────┘
                             │
                             ▼
              ┌────────────────────────┐
              │   Increase frequency by  │ S110
              │   predetermined amount   │
              └────────────────────────┘
                             │
                             ▼
                          S111
        ◇  Upper-limit frequency?  ◇  NO
                             │
                            YES
                             ▼
              ┌────────────────────────┐
              │  Determine frequency that│
              │  is stored in storage unit│ S112
              │  and gives highest-value │
              │    inverter efficiency   │
              └────────────────────────┘
                             │
                             ▼
                    ┌─────────────────┐
                   (      End          ) S113
                    └─────────────────┘
```

FIG. 13

| Timer value $(t_m)$ / Peak current value $(I_p)$ | $t_1$ | $t_2$ | • • • | $t_M$ |
|---|---|---|---|---|
| $I_1$ | $E_{11}$ | $E_{12}$ | • • • | $E_{1M}$ |
| $I_2$ | $E_{21}$ | $E_{22}$ | • • • | $E_{2M}$ |
| ⋮ | ⋮ | ⋮ | | ⋮ |
| $I_N$ | $E_{N1}$ | $E_{N2}$ | • • • | $E_{NM}$ |

For each frequency

# FIG. 14

```
                    ( Start )  S200
                        │
                        ▼
         ┌──────────────────────────┐
         │ Set predetermined voltage │ S201
         └──────────────────────────┘
                        │
                        ▼
         ┌──────────────────────────┐
         │    Set initial frequency  │ S202
         │        (lower limit)      │
         └──────────────────────────┘
                        │
                        ▼
         ┌──────────────────────────┐
         │     Drive at set frequency │ S203
         └──────────────────────────┘
                        │
                        ▼
         ┌──────────────────────────┐
         │         Phase=1           │ S204
         └──────────────────────────┘
                        │
                        ▼
                     S205
         ◇ Timer value acquired, and ◇  NO
           successful in peak holding?
                        │ YES
                        ▼
         ┌──────────────────────────┐
         │ Store combination of frequency, │ S206
         │  timer value, and peak value in │
         │        storage unit        │
         └──────────────────────────┘
                        │
                        ▼
         ┌──────────────────────────┐
         │        Reset timer         │ S207
         │      (Output T-reset)      │
         └──────────────────────────┘
                        │
                        ▼
         ┌──────────────────────────┐
         │         Phase=0           │ S208
         └──────────────────────────┘
                        │
                        ▼
         ┌──────────────────────────┐
         │     Increase frequency by  │ S209
         │     predetermined amount   │
         └──────────────────────────┘
                        │
                        ▼
                     S210
         ◇ Upper-limit frequency? ◇  NO
                        │ YES
                        ▼
         ┌──────────────────────────┐
         │     Reference table, and   │ S211
         │ determine frequency that   │
         │     gives highest-value    │
         │     inverter efficiency    │
         └──────────────────────────┘
                        │
                        ▼
                    ( End )  S212
```

**EP 2 693 599 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009501510 W
- US 2004130915 A1